# EUROPEAN PATENT APPLICATION

(11) **EP 1 613 044 A2**
(43) Date of publication of application: **04.01.2006**
(21) Application number: 05076516.3
(22) Date of filing: 29.06.2005
(51) Int. Cl.: H04M 3/493, H04M 3/42

(54) **Two step call connection**

(30) Priority: 30.06.2004 US 584344 P
(71) Applicant: Satcom Direct, Inc., Satellite Beach FL 32937 (US)
(72) Inventor: Gardner-Springer, Colin M. c/o Satcom Direct, Inc., Satellite Beach Florida 32937 (US); Jensen, James W., c/o Satcom Direct, Inc., Satellite Beach Florida 32937 (US)
(74) Representative: Hyden, Martin Douglas

(57) **Abstract**

A system and method for providing voice or data connectivity to multiple aircraft or communication devices via a single telephone number. The initial call placed by a caller can be to a direct global number, or can be forwarded to the direct global number via a toll-free access number. A caller is prompted to select from an automated selection of aircraft, vessels, communication devices, or other available devices or units. Based upon the selection, the call is routed to the single global number for that selection. A caller then hears a greeting that identifies the aircraft, vessel, or device selected and provides the handset, data service, or other options available. After a caller makes a selection, call connectivity is established.

## Description

### Field of the Invention

The invention relates generally to satellite communication systems and methods and, more particularly, to systems and methods for providing satellite-based communications with multiple mobile air and surface communications devices.

### Background of the Invention

There are several types of satellites deployed into orbit around the earth. Some satellites reflect communications directed at the satellite. Many satellites carry repeaters, for receiving and retransmitting a received communication, and are used for communication. In recent years satellites have been placed in orbits synchronous with the earth's rotation, thereby providing continuous communications capability among almost all parts of the globe.

If a satellite is placed in synchronous orbit above the equator to revolve in the same direction of the earth's rotation and synchronized with the earth's rotation, that satellite will continually remain above a fixed point on the surface of the earth. Many communications satellites have been placed in these synchronous orbits to cover different regions of the globe.

Generally, active communications satellites are orbiting repeaters with broadband characteristics. A signal from a ground station is intercepted by the satellite, converted to another frequency and retransmitted at a moderate power level to an end user receiver. This provides much better signal strength at the receiving end of the circuit, as compared with a signal that is merely reflected from a passive satellite. Active communications satellites are placed in synchronous orbits, making it possible to use them with fixed antennas, a moderate level of transmitter power, and at any time of the day or night. Synchronous satellites are used for television and radio broadcasting, communications, weather forecasting, and military operations. Nowadays, telephone calls are routinely carried by synchronous satellites.

Further, a constellation of satellite systems is used to cover major regions of the globe to enable ground-to-aircraft (and aircraft-to-ground) communications via the satellite systems. One example of such a constellation is INMARSAT, which has four satellites that are located in geostationary orbits, each generally covering a region of approximately one-fourth of the globe with a certain amount of overlap between regions. These satellites are referred to as AOR-W (Atlantic ocean region-west), AOR-E (Atlantic ocean region-east), IOR (Indian ocean region), and POR (Pacific Ocean Region).

INMARSAT satellites support various different types of services to the aeronautical market. These services are defined as AERO H, AERO H+, AERO I, Swift64, and AERO M. All these services are available to aeronautical users. The airborne satellite communication system provides aircraft with multiple digital voice, fax, and real-time Internet communications capabilities. The system is specifically adapted for use in global two-way, ground-to-air communications by aircraft operators requiring global voice, fax, and Internet communications for their flight crews and passengers.

Similarly, the AERO I system provides aircraft with multiple digital voice, fax and real-time communications capabilities. This service is tailored to meet the communication needs of short/medium haul aircraft operators requiring voice, fax and data communications for the flight crew and passengers. AERO I spot beam service is available within each INMARSAT satellite region around the world. Each region contains several spot beams and users must be illuminated by a spot beam for an AERO I system to operate. Not all satellite regions have complete spot beam coverage and, based on the geographic location of an aircraft, users may not be able to use their AERO I system all of the time.

The INMARSAT AERO H+ system provides aircraft the option to use AERO H or AERO I based on the geographic location of the aircraft. To take advantage of this option, the aeronautical communication system must be able to support both AERO H and AERO I.

Another satellite system available for communications is the IRIDIUM satellite system, which delivers communications services to remote land, ocean, polar, and air regions through a constellation of sixty-six low-earth orbiting (LEO) satellites. IRIDIUM telephones and handsets communicate with the IRIDIUM network to send and receive voice and data communications.

Prior art systems have utilized direct ground-to-air calling systems, which provide communications between aircraft and Ground Earth Stations (GES). Generally, customers are provided with a calling card with instructions on how to call their aircraft.

For example, a typical caller trying to communicate with an aircraft based on three-quarters of the world coverage may have to dial several numbers, wait for a voice prompt, enter a PIN, enter the satellite area code, and then enter the aircraft number and terminal location. This process requires dialing over thirty-one sequential numbers in addition to waiting for voice confirmation. Similarly, a communication based on one-fourth of the world coverage requires entering/dialing twenty-seven numbers. The dialing complexity involving such a large number of sequential numbers has greatly deterred use of such ground-to-air communications for contacting an aircraft.

Further, prior art systems that use synchronous satellite systems, such as the INMARSAT, for inbound and outbound telephone calls from a ground station to aircraft require the input of a number of variables to make the calls. In addition to the need to dial several access numbers, callers must know the location of the aircraft, the satellite area code to which the aircraft is logged on to, the aircraft number, the aircraft terminal number, international access code for the specific global position of the aircraft and identification of the long distance provider may be required because not all long distance service providers may recognize the satellite area codes. Furthermore, if the aircraft is located in the AOR-E or IOR regions a call may not be made from North America. This is because the major long distance carriers, such as AT&T, MCI, and SPRINT, use TELENOR or another INMARSAT wholesaler for such communications.

Accordingly, prior art direct call systems are unreliable and cumbersome at best. Further, within each satellite region there are a number of GES, which are owned and operated by different entities and each GES provides different types of aeronautical services. For example, some GES operators support fax, while others may not offer such service. Similarly, not all GES operators support PC data, secure voice management, DID (direct in dial) and AESID (Aircraft Earth Station Identifier). Thus, some GES may support multiple numbers assigned/allocated for various services, while others have only very few numbers available to support a broad range of communication services.

Additionally, prior art systems are limited to connecting to individual and different aircrafts or other mobile vehicles within a fleet using an assigned single telephone access number. If a corporate fleet includes multiple aircrafts and a shipping vessel, this will require that a caller maintain separate contact information for the communication devices on board each. In some instances, a caller may desire to contact a person known to be on a corporate aircraft, but the caller cannot easily contact that person without knowing the identification information of that particular aircraft or vessel.

Further, prior art systems would require that the caller place a separate call to each aircraft or vessel until the person is located. This process is time-consuming and the expense associated with placing multiple calls can be great. Further, different vehicles, vessels, or crafts within the same fleet might use different communication systems, and the procedure for contacting each can vary. A caller would therefore be required not only to place multiple calls but also to follow different calling procedures associated with each of the different communication systems.

Therefore, there is a need in the industry for a communications system and method that ease communications with multiple mobile communications devices and transportation vessels or crafts while providing an automated and user-friendly interface. There is also a need in the industry for a communications system and method that provide callers with easy access to multiple satellite systems, for example both INMARSAT and IRIDIUM, via a single access number.

### Summary of the Invention

The invention solves many of the problems associated with communicating with multiple aircraft or other mobile vessels or crafts for voice and data exchanges. Various embodiments of the invention disclosed and described herein are directed to methods and systems for establishing communications with various modes of transportation, including a spacecraft, aircraft, vessel, and with various other communications devices that are on-board or that can be connected via short distance radio frequency or Bluetooth communications schemes.

In one example embodiment, the system and method of the invention provide connectivity to multiple aircrafts or other modes of transportation via a single ten-digit number. The initial call can be to a direct universal or assigned number, or the call can be forwarded or routed to the direct universal number via a toll-free access number. A caller is next prompted to select from an automated selection of aircraft or other mobile crafts, identified by tail number or other identifying means.

Based upon the selection, the system connects the caller to the single universal number for that selection. Callers then hear a greeting that identifies the aircraft selected and provides the handset, data service, or other options available for that aircraft. For example, the caller may be able to place a voice call to the flight deck of the aircraft or to one of a plurality of available cabin handsets, or send a fax or transmit other data communication.

In another embodiment, the system and method of the invention provide connectivity to multiple mobile communication devices via a single ten-digit number. The number can be the direct universal or assigned number or a toll-free number that forwards the call to the applicable universal number. A caller is next promoted to select a desired contact from an automated list of choices, for example an aircraft satellite communication system, an IRIDIUM handset, a maritime vessel, or a cellular telephone. Based upon the caller's selection, the system connects the caller to the single universal number for that selection. The caller then hears a greeting that identifies the selected device and provides any additional handset, data service, or other options available for that device.

One advantage of the system and method of the invention is that voice or data access to a plurality of aircraft or vessels can be achieved via a single ten-digit telephone number. Another advantage of the invention is that a plurality of communication devices having the same or varying communication systems can be accessed via a single ten-digit telephone number.

The above summary of the invention disclosed herein is not intended to describe each illustrated embodiment or every implementation of the invention. The figures and the detailed description that follow more particularly exemplify these embodiments.

### Brief Description of the Drawings

The invention may be more completely understood in consideration of the following detailed description of various embodiments of the invention in connection with the accompanying drawings, in which:
FIG. 1 is a flowchart of a method of routing a call to a remote travel vessel according to one embodiment of the invention.
FIG. 2 is a further flowchart of the embodiment of FIG. 1.
FIG. 3 is a further flowchart of the embodiment of FIG. 1.
FIG. 4 is a further flowchart of the embodiment of FIG. 1.
FIG. 5 is a further flowchart of the embodiment of FIG. 1.
FIG. 6 is a flowchart of another method of routing a call to a remote travel vessel according to on embodiment the invention.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives falling within the spirit and scope of the invention as defined by the appended claims.

### Detailed Description of the Invention

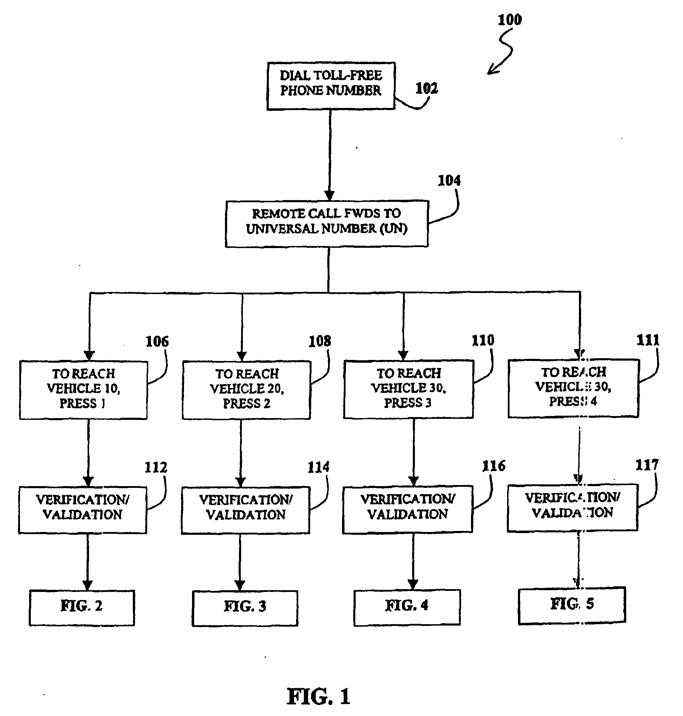

The call routing system and method disclosed herein provide direct communications with multiple mobile air and surface vessels, vehicles, and crafts. The invention can be more readily understood by reference to FIGS. 1-5 and the following description. While the invention is not necessarily limited to such an application, the invention will be better appreciated using a discussion of example embodiments in such a specific context.

One recent global calling system that enables ground stations to call an aircraft anywhere within INMARSAT and similar communication satellite systems, as previously described, by using only one simple phone number without the necessity for human intervention, is disclosed in U.S. Patent Application Publication No. 2002/0111165, which is commonly assigned with the present application and is incorporated herein by reference. The system disclosed in U.S. Patent Application Publication No. 2002/0111165 is fully automatic and solid state and provides a ground-to-air communications system with comprehensive features to enable real-time and efficient communications between aircraft, vessels, and multiple ground earth stations on a global coverage basis.

FIGS. 1-4 comprise a flowchart of one embodiment of the call routing system and method of the invention, in which one of a plurality of aircrafts, vessels, and vehicles can be contacted by a caller via a single telephone number. Throughout this application, the term "vehicle" will be used to refer to any of a plurality of aircrafts and surface and water-going vessels and vehicles, individually or in the aggregate and without limitation, although individual aircrafts, vessels, and vehicles may be referred to in various examples. Also, the term "call" will be used to refer to any of a telephone call, data call, or other communications connection from, with, or between telephones, computers, systems, or other devices. For example, "devices" can encompass and include communication devices, data gathering or generating devices, audio and video equipment devices, lighting and alarm equipment devices, and any and all other devices that can be accessed locally or remotely for activation, communication, deactivation, and/or other action, as will be understood by those skilled in the art in the context of the embodiments described herein.

According to one embodiment of call routing method 100, a call is initiated by a caller dialing an access number assigned to the plurality of vehicles at step 102. In the example embodiment of FIG. 1, the access number is a toll-free ten-digit telephone number, for example a number beginning with 800 or 888, although the access number can be assigned any available telephone number. The number is preferably a ten-digit number for simplicity and user familiarity. The ten-digit number can be printed on a wallet-sized card that is presented to the caller and can be conveniently carried on the person of the caller at all times. A quick reference to the number on the card prepares the caller for establishing communication with the aircraft over any convenient terrestrial telephonic communications system, landline and/or cellular, although many cellular phones and providers do not support international dialing or require special account access permissions. In one embodiment, however, initiating communication with the ten-digit number is as simple as dialing a long-distance call.

If a toll-free call is placed to access the system and contact a vehicle, the toll-free call is automatically forwarded to a system number, referred to as a Universal Number (UN), at step 104. The UN then provides an automated selection of available vehicles from which the caller can choose. For example, the embodiment of FIG. 1 offers connectivity with three vehicles, each having an individual prompt: Vehicle 10, Vehicle 20, and Vehicle 30. The program broadcasts a recorded personal greeting to the caller identifying the specific vehicles available at steps 106, 108, 110 and 111.

In one embodiment, the available vehicles are identified by an aircraft tail number or other externally assigned identification means, for example a license or registration number. The available vehicles can also be identified by an internally assigned name or fleet number, for example a corporate name or internal inventory designator. The available selections are preferably provided to the caller as an automated voice menu from which the caller can make a desired selection by pressing a corresponding number on their telephone handset. The automated voice menu is hosted by a computer operations center that manages and monitors the system.

Subsequently at steps 112, 114, 116 and 117, the program logic proceeds to search a database managed by an automated computer operations center system for account verification, services available, and other pertinent information. If the account is found invalid or the aircraft not identified, a recorded voice message is broadcast to the caller with directions and the call is disconnected or with instructions to call the service provider.

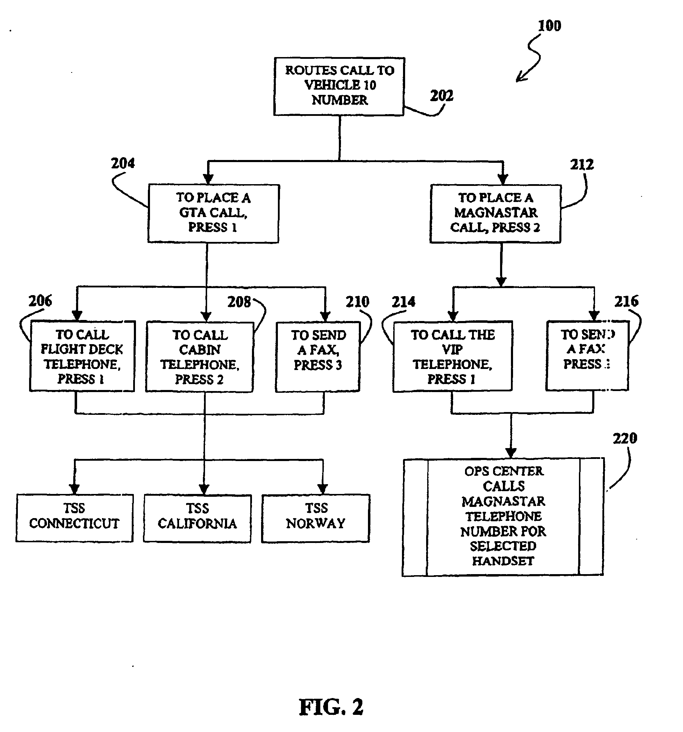

Referring to FIG. 2 wherein the caller has selected Vehicle 10 at step 106 and proceeded through verification and validation at step 112, the system routes the call to the ten-digit UN assigned to Vehicle 10 at step 202. In this embodiment, Vehicle 10 is an aircraft and the caller is given instructions to proceed to the next step of either connecting to a service or person or sending a fax. For example, the options associated with Vehicle (aircraft) 10 include placing an ground-to-air, ground-based satellite call at step 204 to either call a flight deck telephone (206), a cabin telephone (208), or to send a fax (210). The call is the routed to one of the Telenor Satellite Services earth stations that are located in Connecticut, California, or Norway.

Another option is placing a MAGNASTAR call at step 212 to either call a VIP telephone (214) or to send a fax (216). This selection by the caller directs the call to a specific site in the vehicle via the associated service, for example to the flight deck or to a cabin telephone as illustrated in FIG. 2. These sites are vehicle-specific and maintained by a communications operations center. Some vehicles have multiple independent sites within the aircraft at which a call can be received. After a caller selects the desired option, the system, via the operations center, automatically places the appropriate call or makes the appropriate fax/data connection to connect the caller with the selected vehicle at step 220.

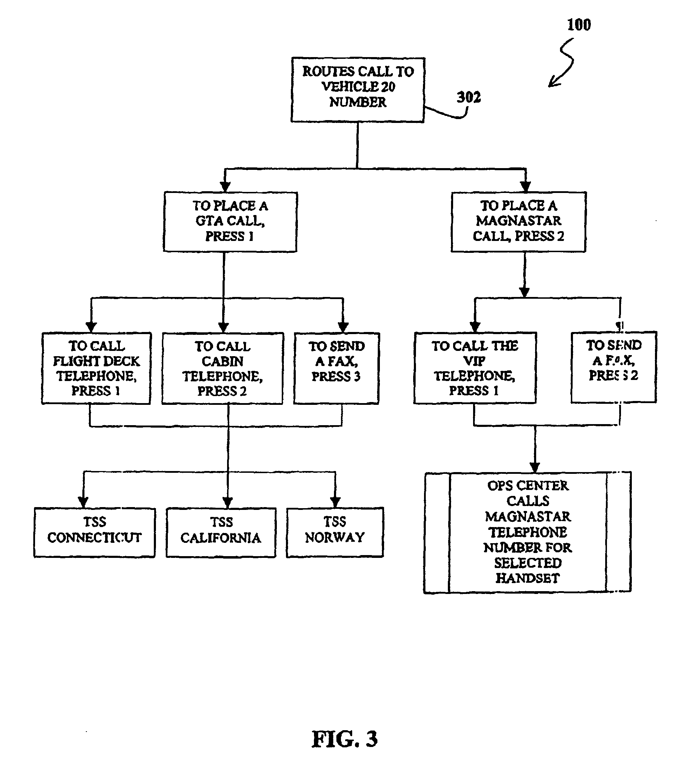

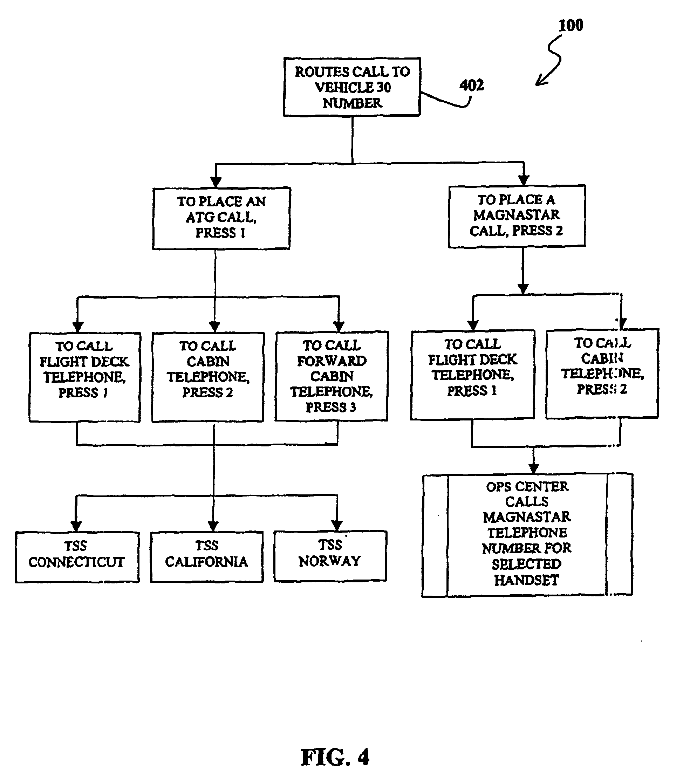

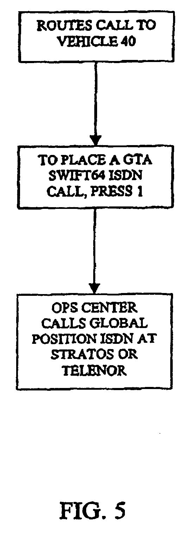

Similar to FIG. 2, FIGS. 3-5 depict further steps of method 100. If a caller selects Vehicle 20 at step 108 and successfully completes validation and verification at step 114, the call is routed to the UN for Vehicle 20 at step 302 in FIG. 3. If a caller selects Vehicle 30 at step 110 and successfully completes validation and verification at step 116, the call is routed to the UN for Vehicle 30 at step 402 in FIG. 4. If a caller selects Vehicle 40 at step 111 and successfully completes validation and verification at step 117, the call is routed to the UN for Vehicle 40 as set forth in FIG. 5. The remainder of method 100 continues as described with reference with FIG. 2, varying according to vehicle-available sites.

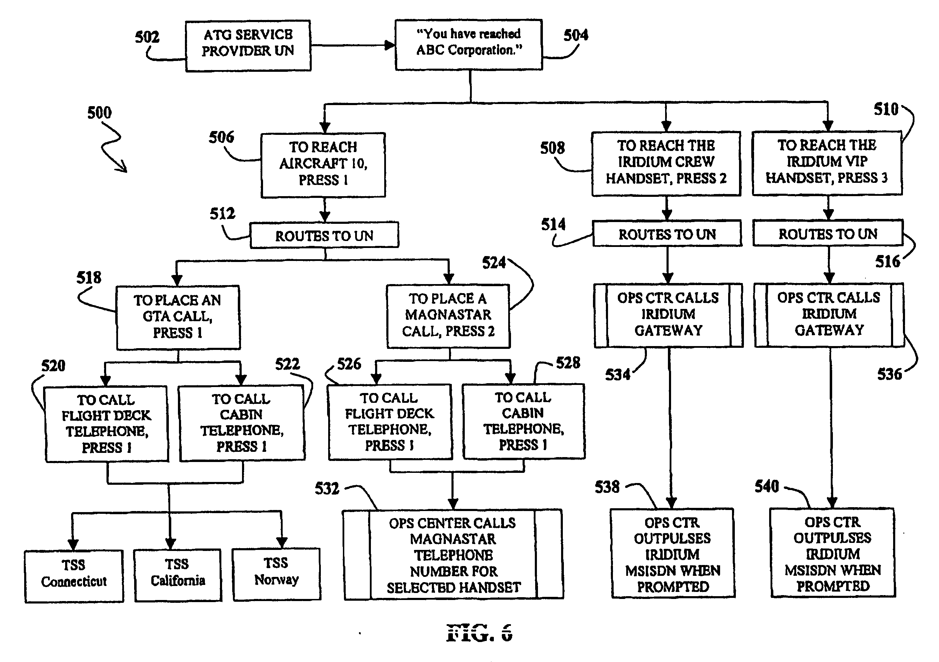

FIG. 6 is a flowchart of another embodiment of a call routing system and method 500 of the invention, which is similar to the embodiment of FIGS. 1-5 described above with the addition of the option of contacting a plurality of communication devices via a single ten-digit telephone number. To contact a particular aircraft, vessel, or other mobile vehicle, a caller initiates contact by dialing a ten-digit telephone number, or Universal Number (UN), at step 502, using an air-to-ground (ATG) communications provider. This telephone number can be any available ten-digit telephone number, including a toll-free number, for example one assigned and associated with a particular fleet, corporation, or client. Refer also to the above description relating to FIGS. 1-4.

At step 504, the caller initially hears an automated greeting. The greeting can be a general greeting, such as, "You have reached ABC Corporation." In one embodiment, the automated greeting can be customized for and associated with the particular ten-digit telephone number dialed. For example, the greeting can be customized by a particular corporation to include a message directed to corporate, customer, or client callers.

Next, the call routing system prompts the caller to select an available vehicle at steps 506, 508, and 510. The available vehicles are identified, as described in further detail above, by the aircraft's tail number, vessel license or registration number, or other identification means. The available aircraft or vessels can also be identified by a communication type. In FIG. 5, the caller can select from Aircraft 10, an IRIDIUM crew handset, and an IRIDIUM VIP handset (310). Although this example uses particular vehicles and devices for purposes of illustration of the invention, other vehicles, devices, and combinations of vehicles and devices can be used without departing from the spirit and scope of the invention. The available selections are preferably provided to the caller as an automated voice menu in which the caller can make a desired selection by pressing a corresponding number on their telephone handset. The automated voice menu is hosted by an operations center that manages and monitors the system.

After a selection has been made, the system routes the caller to the selected aircraft, vessel, or communication device by routing the call to the ten-digit UN assigned to that selection at steps 512, 514, and 516. If additional options are available for the selection, the options are then presented to the caller for selection via a similar automated voice menu. For example, the options associated with Aircraft 10 include placing an ATG call at step 518 to call the flight deck telephone 520 or the cabin telephone 522, or placing a MAGNASTAR call at step 524 to call the flight deck telephone 526 or to call the cabin telephone 528. These options will vary depending upon the particular vehicle selected.

After a caller selects the desired option, the system, via the operations center, places the appropriate call to connect the caller with the vehicle at steps 530 and 532. Alternatively, the system, via the operations center, calls the IRIDIUM gateway at steps 534 and 536 to connect the caller to an IRIDIUM device 538, 540.

In another example embodiment, the call routing system of the invention is accessible by a variety of modem communications devices. In addition to landline, cellular, and satellite and other advanced communicaiton technology telephones, the call routing system and method can also be used as a communications interface to route calls and communications, and establish connectivity, between personal computers, computer networks, handheld computer devices and personal digital assistants (PDAs), two-way pagers, and other voice and data devices, and mobile vessels and crafts. In this embodiment, the computer or other device can contact and connect with the call routing system via POTS (plain old telephone service) where appropriate for line and/or modem equipped devices.

Other devices can connect using wired or wireless, stand-alone or networked, Internet connections and communications protocols, including VOIP (voice over internet protocol). Additionally, devices can also connect to the call routing system via a cellular service provider, although some providers may require particular account types or permissions in order to access particular numbers, for example a Universal Number (UN) having a country code different from a cellular service subscriber's account telephone number country code.

The system and method of the invention thereby provide a user-friendly and convenient way of establishing communications with a plurality of globally mobile communications devices and vehicles, including aircraft, vessels, and other vehicles, regardless of a particular device or vehicle's surface or air location. The system and method further provide connectivity via multiple communications and satellite systems, technologies and formats, all accessible by a single access number.

The invention as depicted and described herein may be embodied in other specific forms without departing from the spirit or essential attributes thereof, and it is, therefore, desired that the embodiments be considered in all respects as illustrative and not restrictive. Similarly, the above-described methods are illustrative sequential processes and are not intended to limit the methods of the invention to those specifically defined herein. It is envisioned that various depicted steps can be performed in differing substantive and sequential order. In addition, various unspecified steps and procedures can be performed in between those steps described herein without deviating from the spirit and scope of the invention. Reference should be made to the appended claims rather than to the foregoing description to indicate the scope of the invention.

## Claims

1. A method of routing and connecting a call to one of a grouping of available vehicles, the method comprising:
assigning at least one system access communication number to the grouping of vehicles;
configuring a call routing system to provide a selection menu comprised of each of the vehicles in the grouping;
initiating a call by dialing the system access number;
selecting at least one vehicle from the grouping of available vehicles with which to establish connectivity;
routing the call to a vehicle access number assigned to the at least one vehicle;
providing a selection of available services and devices with which to connect the call; and
automatically establishing call connectivity with the at least one service or communications device one a selection is made; wherein the available vehicles include surface vehicles, aircraft, water vessels, and the like.

2. A method as claimed in claim 1, wherein the selection menu comprises an automated voice prompt menu, and wherein the step of selecting the at least one vehicle comprises entering a corresponding number on a telephone keypad.

3. A method as claimed in claims 1 or 2, wherein the available vehicles are identified by externally or internally assigned identifiers, the assigned identifiers being stored in a searchable vehicle database.

4. A method as claimed in claim 3, wherein the externally assigned identifier comprises an aircraft tail number, a vehicle license number, or a vehicle registration number.

5. A method as claimed in claim 3, wherein the internally assigned identifier comprises a vehicle name, a vehicle number, or a fleet number.

6. A method as claimed in any preceding claim, further comprising the steps of:
verifying the call by searching a subscriber database for subscriber account information and associated account services; and
broadcasting a pre-recorded instructional message and terminating the call if call verification fails.

7. A method as claimed in any preceding claim, wherein the selection of available devices with which to connect includes a communications device.

8. A method as claimed in claim 7, wherein the communications device comprises a land-line based telephone, a cellular telephone, a two-way pager, a pager, or a Bluetooth based device.

9. A method as claimed in any preceding claim, wherein the selection of available devices with which to connect includes at least one data communication device.

10. A method as claimed in claim 9, wherein the data communication device comprises a facsimile machine, a personal computer, a personal digital assistant (PDA), or a pager.

11. A method as claimed in any preceding claim, wherein the at least one service with which to connect the call comprises a satellite communication system, a cellular telecommunications network, a public telephone system, or the Internet.

12. A method as claimed in any preceding claim, wherein the call is initiated over a land-line based telephonic communications system or a cellular based telephonic communications system.

13. A method as claimed in any preceding claim, wherein the selection of available services and devices is vehicle, vessel, or aircraft specific and is maintained by a communications operations center.

14. A method of establishing voice or data call connectivity with one of a grouping of mobile communication devices, the method comprising the steps of:
assigning at least one system access communication number to the grouping of devices;
configuring a call routing system to provide a selection menu comprised of each of the devices in the grouping;
initiating a call by dialing the system access number;
identifying at least one available mobile communication device;
selecting a target device from the grouping of available mobile devices with which to establish connectivity;
routing the call to a mobile communication device access number associated with the target device; and
establishing satellite system-based call connectivity with the target device.

15. A method as claimed in claim 14, further comprising the step of:
providing an automated greeting associated with the system access number before selecting the target device.

16. A method as claimed in claim 14 or 15, wherein the available devices are identified in a menu, and wherein the step of selecting a target device comprises entering, via a telephone, an identifier corresponding to the target device selected from the menu.

17. A method as claimed in claim 16, wherein the device identification includes an automated voice prompt menu that associates the devices with a number or a character.

18. A method as claimed in claims 14-17, wherein the mobile communications device is associated with a mobile vehicle, a craft, or a vessel.

19. A method as claimed in claims 14-18, wherein the mobile communications device is identified by a satellite system communication format.

20. A method as claimed in claims 14-19, after routing the call to the access number associated with the target device, further comprising providing a selection of additional available device options.

21. A method as claimed in claim 20, wherein the selection of additional available device options is presented in an automated voice prompt menu.

22. A method as claimed in claims 14-21, wherein the at least one available mobile communication device comprises a telephone device or a data device.

23. A method as claimed in claim 22, wherein the data device comprises a facsimile machine, a personal computer, a personal digital assistant (PDA), or a pager.

24. A method as claimed in claims 14-23, wherein the step of identifying at least one available mobile communication device comprises identifying a grouping of available mobile communication devices, and wherein the grouping of available mobile communication devices communicate using a plurality of available satellite communication systems.

25. A method as claimed in any preceding claim, wherein the system access number consists of ten digits.

26. A method as claimed in claim 25, wherein the system access number comprises a three-digit area code and a seven-digit number assigned to the grouping of available vehicles or devices.

27. A method as claimed in claim 26, wherein the three-digit area code is a toll-free number designator.

28. A method as claimed in any preceding claim, further comprising the step of automatically forwarding the call to a call routing system number.

29. A method as claimed in any preceding claim, wherein the vehicle access number or device access number comprises a ten-digit telephone number.

30. A communication system for routing and connecting a voice or data call to one of a grouping of available mobile communication devices, the system comprising:
a computer-based communications management system having at least one port adapted for receiving incoming telephonic communications initiated by a caller using a telephone access number; and
a machine readable call management program adapted to operate on the computer-based system and to be responsive to the telephone access number to solicit a target communication device selection from the caller from among the grouping of available communication devices so as to effect a telephonic communication connection with the target communication device, wherein the telephonic communication connection with the target device is established using one of a plurality of available satellite communication systems.

31. A system as claimed in claim 30, wherein the telephone access number consists of ten digits.

32. A system as claimed in claim 31, wherein the telephone access number comprises a three-digit area code and a seven-digit number assigned to at least one mobile vehicle.

33. A system as claimed in claims 30-32, wherein the grouping of available mobile communication devices is each associated with a mobile vehicle.

34. A system as claimed in claims 30-33, wherein the target device is selected from the group consisting of a land-line based telephone, a cellular telephone, a two-way pager, a pager, a Bluetooth based device, or data device.

35. A system as claimed in claim 34, wherein the data device comprises a facsimile machine, a personal computer, a personal digital assistant (PDA), or a pager.

36. A system as claimed in claims 30-35, wherein the call management program further effects a call verification procedure.

37. A systems as claimed in claims 30-36, wherein the call management system includes a voice menu prompt system operable to present the grouping of available communication devices to the caller and receive a target device selection from the caller.

38. A system for routing and connecting a call to one of a grouping of available vehicles, the system comprising:
means for assigning at least one system access communication number to the grouping of vehicles;
means for configuring a call routing system and providing a selection menu comprised of each of the vehicles in the grouping;
means for receiving a call initiated by dialing the system access number;
means for receiving a selection of at least one vehicle from the grouping of available vehicles with which to establish connectivity;
means for routing the call to a vehicle access number assigned to the at least one vehicle;
means for providing a selection of available services and devices with which to connect the call; and
means for automatically establishing call connectivity with the at least one service or communications device one a selection is made, wherein the available vehicles include surface vehicles, aircraft, water vessels, and the like.

39. A system for establishing voice or data call connectivity with one of a grouping of mobile communication devices, the system comprising:
means for assigning at least one system access communication number to the grouping of devices;
means for configuring a call routing system and providing a selection menu comprised of each of the devices in the grouping;
means for receiving a call initiated by dialing the system access number;
means for identifying at least one available mobile communication device;
means for receiving a selection of a target device from the grouping of available mobile devices with which to establish connectivity;
means for routing the call to a mobile communication device access number associated with the target device; and
means for establishing satellite system-based call connectivity with the target device.
